# EUROPEAN PATENT SPECIFICATION

(11) **EP 4 037 953 B1**
(45) Date of publication and mention of the grant of the patent: **08.05.2024**
(21) Application number: 21701303.6
(22) Date of filing: 20.01.2021
(51) Int. Cl.: B62B 1/14, B62B 1/26, B62B 3/00, B62B 3/10, A47B 31/02

(54) **BEVERAGE SERVING TROLLEY**
SERVIERWAGEN FÜR GETRÄNKE
CHARIOT DE SERVICE À BOISSONS

(30) Priority: 23.01.2020 DE 102020200830
(43) Date of publication of application: 10.08.2022
(73) Proprietor: Dometic Sweden AB, 171 54 Solna (SE)
(72) Inventor: SÖÖDI, Birk, 131 34 Nacka (SE); MEDA, Samuele, Chichester West Sussex Sussex PO18 0 GR (GB)
(74) Representative: Grosse, Felix Christopher
(86) International application number: PCT/EP2021/051208
(87) International publication number: WO 2021/148471

(56) References cited:
- KR-U- 20120 006 719
- US-A1- 2017 340 105
- US-B1- 8 544 141
- US-B1- 9 205 951

## Description

The present invention relates to a beverage serving trolley.

Beverage serving trolleys have generally been known for a long time. Typically, a beverage serving trolley is a mobile rack having wheels, a handle and one or more shelfs for beverage bottles. Depending on the individual preferences, beverage serving trolleys with a number of accessories are available. In case the beverage serving trolley is used for more than just presenting beverage bottles, but also, for example, for preparing drinks, additional equipment is necessary which makes beverage serving trolleys often look messy and crowded.

A bulletin board caddy configured for storing different things is disclosed for example in US 9 205 951 B1. A storage and serving cart with a cabinet assembly and different storage accessories disposed inside a top plate is disclosed for example in US 2017 0 340 105 A1, while KR 2012 0 006 719 U discloses an exemplary stationary table with a storage accessory which can be inserted into the table top.

Furthermore, when the beverage serving trolley is moved, items placed on the trolley may slip or even fall over and the beverage serving trolley thus has to be cleaned extensively.

In order to overcome these drawbacks of the presently available beverage serving trolleys, the present invention aims to provide a beverage serving trolley at which items are kept in place and cleaning effort is reduced.

To achieve the above object, the present invention provides a beverage serving trolley as defined in claim 1, comprising a supporting structure, at least one wheel, a presentation basket being configured to receive beverage bottles and ice cubes, and a horizontally arranged top plate including a flat surface and a rim and being of a rectangular shape.

According to the present invention, the top plate comprises a cutout that is configured to accommodate the presentation basket, wherein the top plate and the presentation basket are configured such that the presentation basket can be inserted into the cutout from the above and is removable from the cutout by lifting the presentation basket in an upward direction. As such, the presentation basket is secured from falling over when the beverage serving trolley is moved.

In the inserted state of the presentation basket, the presentation basket rests on a cutout edge that is sunken with respect to the flat surface of the top plate. This provides from a smooth fit of the presentation basket within the cutout.

At the underside of the top plate, the top plate comprises a plurality of bolts along the rim protruding downwards and the top plate is fixed to the beverage serving trolley by the bolts. This facilitates the mounting of the top plate and increases the overall stability of the beverage serving trolley.

The top plate including the bolts is of metal and the bolts are welded to the underside of the top plate. This further facilitates the mounting of the top plate and increases the overall stability of the beverage serving trolley.

The top plate further includes at least one recessed portion that is configured to accommodate a serving and/or a chopping board in order to hold the serving tray and/or the chopping in place when moving the beverage serving trolley. This prevents boards and trays placed on the beverage serving trolley from slipping when the beverage serving trolley is moved.

According to a preferred embodiment, the top plate has only one recessed portion that has a rectangular area. As such, trays and boards can be placed into the recessed portion side by side in two different orientations.

According to a preferred embodiment, the flat surface surrounds the sunken cutout and the recessed portion and extends to the rim of the top plate. As such, the top of the beverage serving trolley has a smooth outer appearance which can be cleaned easily and quickly.

According to a preferred embodiment, the top plate has a vertically cut edge at the rim. This protects the rim of the top plate from damages caused by impacts from the side.

According to a preferred embodiment, the rectangular shape of the top plate has rounded corners. This protects the corners of the top plate from damages caused by impacts from the side. Furthermore, the risk of injury to people is reduced.

According to a preferred embodiment, the material thickness of the top plate at least at the rim is within the range of 1 mm and 5 mm. This increases the stability of the top plate.

According to a preferred embodiment, the beverage serving trolley has a horizontal gap all around the beverage serving trolley below the rim of the top plate. The horizontal gap provides the possibility of arranging accessories for the beverage serving trolley.

According to a preferred embodiment, the beverage serving trolley further has a handle for moving the beverage serving trolley.

The present invention will now be further explained by use of exemplary embodiments illustrated in the accompanying drawings, in which
- Fig. 1: shows a side view of a beverage serving trolley according to a first embodiment not forming part of the present invention,
- Fig. 2: shows a partly exploded view of the beverage serving trolley shown in Fig. 1,
- Fig. 3: shows a side view of a beverage serving trolley according to a second embodiment not forming part of the present invention,
- Fig. 4: shows another side view of the beverage serving trolley shown in Fig. 3,
- Fig. 5: shows a side view of a beverage serving trolley according to a third embodiment which forms part of the present invention,
- Fig. 6: shows a perspective view on constructional details that may be realized in a beverage serving trolley according to an embodiment and which are realized in the beverage serving trolley as shown in Fig. 5,
- Fig. 7: shows a top view on constructional details that may be realized in a beverage serving trolley according to an embodiment and which are realized in the beverage serving trolleys as shown in Figs. 3 and 5,
- Fig. 8: shows a top view on constructional details that may be realized in a beverage serving trolley according to an embodiment and which are realized in the beverage serving trolley as shown in Fig. 5,
- Fig. 9: shows an oblique view on the top part of the beverage serving trolley as shown in Fig. 5,
- Fig. 10: shows a perspective view on a top plate that may be comprised by a beverage serving trolley according to an embodiment and that corresponds to the one installed in the beverage serving trolley shown in Fig. 5,
- Fig. 11: shows a view from below on a constructional detail that may be realized in a beverage serving trolley according to an embodiment and which are realized in the beverage serving trolleys shown in Figs. 3 and 5,
- Fig. 12: shows an enlarged section of a perspective side view of the beverage serving trolleys as shown in Figs. 3 and 5,
- Fig. 13: shows a perspective view on the top of a presentation basket that may be comprised by a beverage serving trolley according to an embodiment and that corresponds to the one with which the beverage serving trolleys shown in Figs. 1, 3 and 5 are equipped,
- Fig. 14: shows a perspective view on the bottom of the presentation basket shown in Fig. 13,
- Fig. 15: shows a further equipped embodiment of the presentation basket shown in Fig. 13,
- Fig. 16: shows an exploded view of the presentation basket shown in Fig. 13, and
- Fig. 17: shows a perspective view of one of the symmetrical parts of the light module.

Similar or identical elements in the various embodiments are labelled with the same reference numbers.

Terms indicating any kind of orientation or direction like, for example, upwards, upper, downwards, lower, vertical, horizontal, sunken and lift up refer to the beverage serving trolley when standing on the ground, unless explicitly defined in a different manner. The terms "rear" and "front" are to be understood with respect to the direction of movement when the beverage serving trolley (1) is pushed by the handle (13).

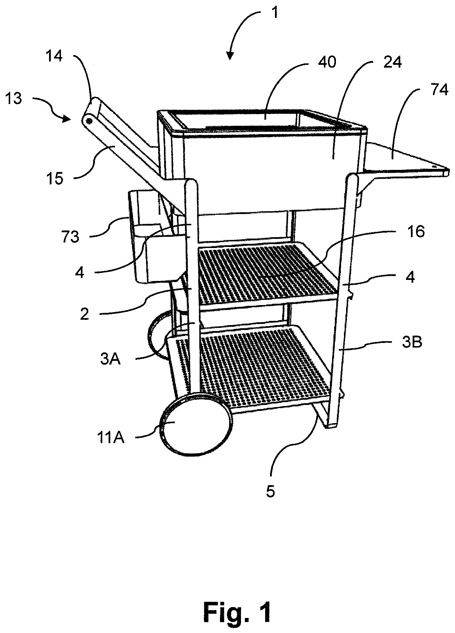

In Figs. 1, 3 and 5, three different embodiments of the beverage serving trolley 1 are shown. In the first embodiment shown in Fig. 1, the beverage serving trolley includes a supporting structure 10 that is made-up of U-shaped steel plates 3A and 3B, each including one horizontal part 5 and two vertical parts 4. The four vertical parts 4 of the U-shaped steel plates 3A and 3B are interconnected inter alia by the shelfs 16 and by the presentation basket supporting frame 24, in order to increase the overall stability of the beverage serving trolley 1. The shelfs are freely accessible from the sides of the beverage serving trolley 1 and not covered by doors or the like. The vertical parts 4 of the U-shaped steel plate 3A at the rear side of the beverage serving trolley 1 are furthermore interconnected by the handle 13. The term "rear side" thus refers to the moving direction of the beverage serving trolley 1 when pushed from the side of the handle 13. The front side of the beverage serving trolley 1 is consequently at the opposite side of the handle 13.

In the embodiment of Fig. 1, at the rear U-shaped steel plate 3A, the rear wheels 11A are mounted, while at the front U-shaped steel plate 3B, the horizontal part 5 serves as a pedestal. The rear wheels 11A are fixed in orientation and do in particular not swivel around a vertical axis.

The shelfs 16 are made of metal sheets and are perforated with a plurality of round holes, which reduces weight. The metal sheets are bent upwards or downwards at particular sections of their edges, which increases the stability and may in addition prevent a glass that is put on a shelf 16 from falling down. In the embodiment of Fig. 1, the front edge of each shelf 16 is bent downwards and both lateral edges and the rear edge of the shelfs 16 are bent upwards.

The handle 13 is composed of the handlebar 14 mounted between the two handle brackets 15. The handle brackets 15 are made-up of steel plates as well and are flatly screwed together with the vertical parts 4 of the U-shaped steel plate 3A at the rear side.

Furthermore, between the vertical parts 4 of the rear U-shaped steel plate 3A, an accessory is removably mounted which is the storage box 73. The storage box 73 like any other appropriate accessory can simply be hung in respective hooks or protrusions (not shown) at the vertical parts 4 of both U-shaped steel plates 3A and 3B.

A further accessory, which is however rigidly mounted to the beverage serving trolley 1 between the front U-shaped steel plates 3B, is the tray 74. The mounting brackets of the tray 74 are flatly screwed together with the vertical parts 4 of the U-shaped steel plate 3B, in an analogous manner as the handle brackets 15 are mounted to the rear U-shaped steel plate 3A.

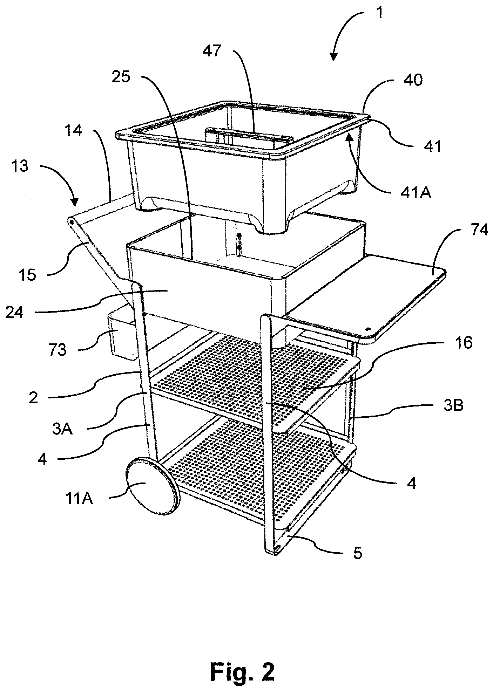

The presentation basket supporting frame 24 has the form of a box with a square ground plate and vertical walls being sufficiently tall to accommodate the presentation basket 40. As shown in Fig. 2 in which the presentation basket is lift upwards, the presentation basket supporting frame 24 is designed to support the presentation basket 40 in a way that the upper outer rim 41 of the presentation basket 40, which laterally protrudes away, rests with its supporting surface 41A located at the underside of the protruding rim 41 on the upper edges 25 of the presentation basket supporting frame 24. This ensures a smooth and even closure between the presentation basket 40 and the presentation basket supporting frame 24.

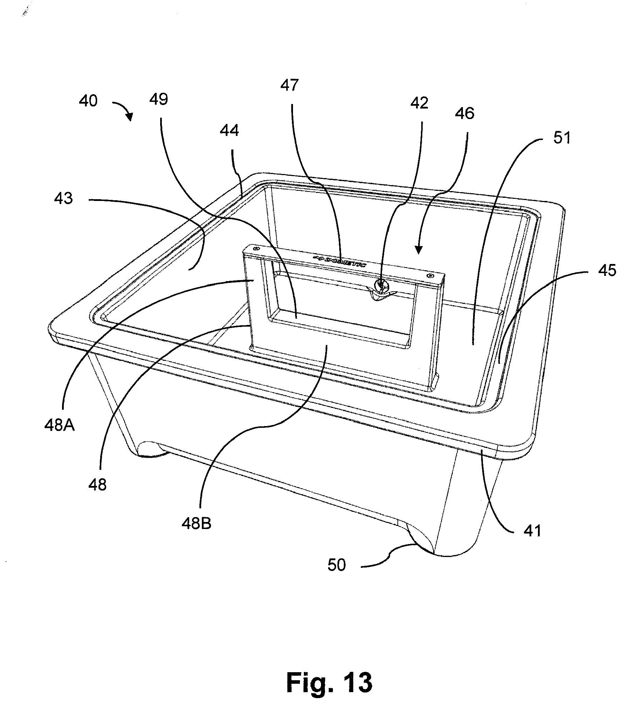

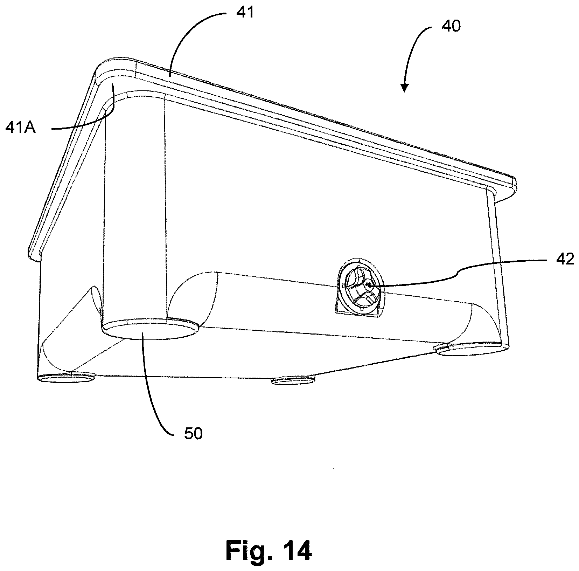

Now, exemplary details of the presentation basket 40 are described, by which it is also referred to Figs. 13 and 14. The presentation basket 40 has generally the form of a box open at the top with a square ground. It is watertight and is essentially composed of a one-piece, deep-drawn or injection-molded plastic component. The ground 51 and the inner side walls 43 of the presentation basket 40 represent the containment for beverages and ice cubes. The wall strength provides sufficient stability, so that, when fully packed with beverages, the presentation basket 40 can be carried by the basket handle 46 without problem. The sufficiently high wall strength furthermore has the effect of temperature isolation, so that, for example, ice cubes in the presentation basket 40 are not melting too quickly.

The basket handle 46 is provided at the center of the ground 51 of the presentation basket 40 and projects upwards from there, so that the presentation basket 40 can be carried stably and evenly by one hand. The basket handle 46 includes the elongated basket handlebar 47 and the basket handle bracket 48, which in turn is composed of two bracket columns 48A and the bracket base 48B. Between the bracket columns 48A there is provided the saddle surface 49 on the bracket base 48B. In the present embodiment, the basket handlebar 47 is a separate metal component that is screwed onto the top of each of the bracket columns 48A. The bracket columns 48A and the bracket base 48B, however, form integral parts of the one-piece plastic component of the presentation basket 40. As mentioned above, the presentation basket 40 and the respective opening into which the presentation basket 40 is accommodated (which in this case is established by the presentation basket supporting frame 24) are square from a top view, so that the presentation basket 40 can be inserted in the beverage serving trolley 1, as desired, with the basket handlebar 47 being oriented either in or transverse to the moving direction of the beverage serving trolley 1 when being pushed.

The bracket columns 48A and, respectively, the basket handlebar 47 are designed such that the basket handlebar 47 is located at a level near, but under the level of the upper edge of the presentation basket 40. At the upper inner rim 44 of the presentation basket 40 there is provided the cover accommodating area 45, which is a sunken area onto which a cover (not shown) can be placed. The level up to which the basket handlebar 47 is located is thus as high as possible, but low enough that it does not contact the cover.

At the inner side wall 43 of the presentation basket 40, an outlet 42 with plug is located near the ground 51 so that water in the presentation basket 40 can be conveniently drained.

The presentation basket 40 further includes footstands 50, one at each corner on the underside of the presentation basket 40. In case the presentation basket 40 is taken out of the beverage serving trolley 1, it can be placed with its footstands 50 on a table or a similar surface.

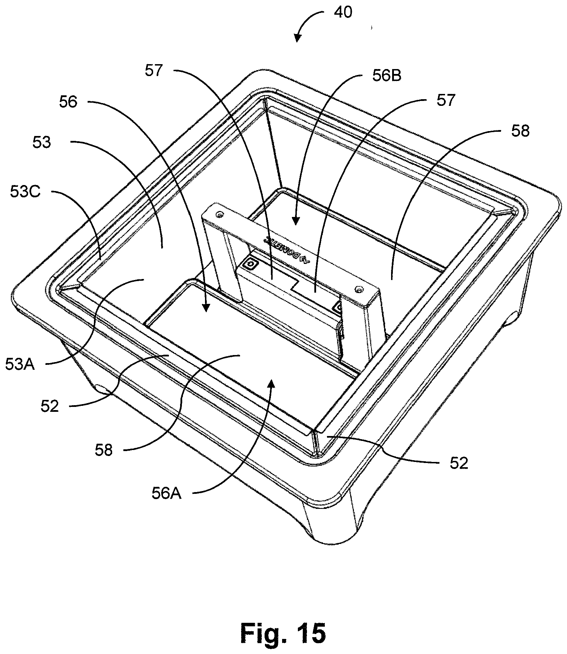

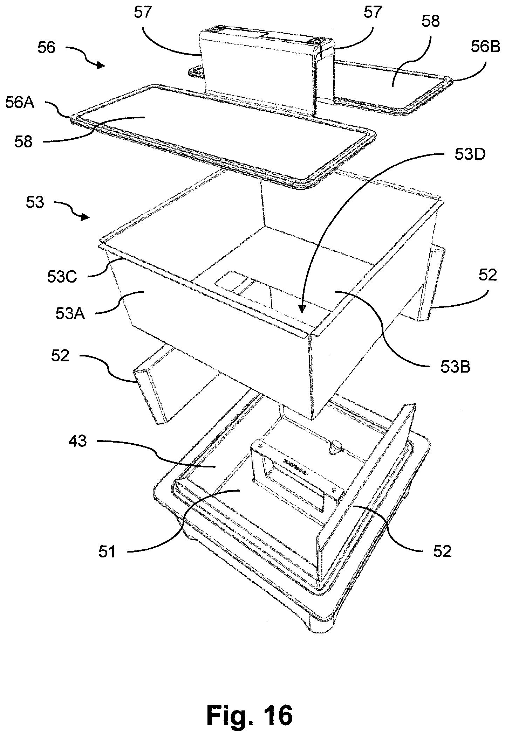

According to a further equipped embodiment of the presentation basket 40 as shown in Fig. 15, 16 and 17, the presentation basket 40 further includes four removable ice packs 52, each of which can be inserted at one inner side wall 43. Each ice pack 52 covers the surface of the respective inner side wall 43. The ice packs 52 are of a plate-like shape with a ground surface corresponding to the surface of one inner side wall 43 of the presentation basket 40. The thickness of the ice pack 52 can be selected depending on the desired cooling performance and, when vertically inserted into the presentation basket 40, the horizontal cross-section of the ice pack 52 has a trapezoidal shape so that all four ice packs 52 fit with each other when inserted (cf. Fig. 16). This shape and assembly also prevents the ice packs 52 from falling over.

The presentation basket 40 further includes the sheet metal tray 53 having a ground 53B and four side walls 53A, which is removably placed into the presentation basket 40 and over the ice packs 52. The sheet metal tray 53 in principle is a metal box with open top and upper edges 53C that are folded outwards, in order to rest on the ice packs 52. The underside of the ground 53B of the sheet metal tray 53 rests on the ground 51 of the presentation basket 40 and includes a cutout 53D for the basket handle 46. The sheet metal tray 53 serves for additional stability of the ice pack assembly and due to its material barely hinders the thermal conduction.

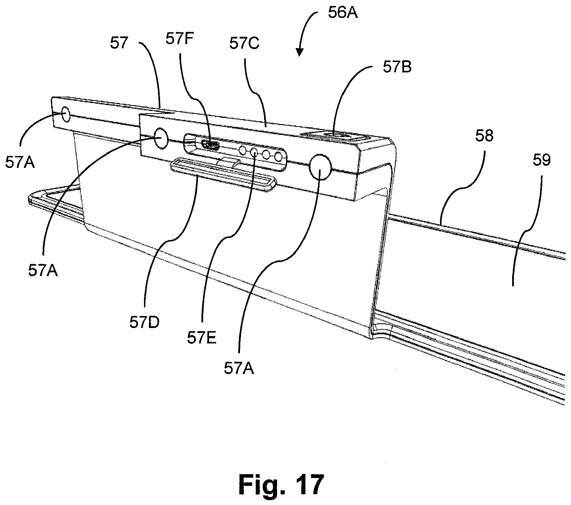

The presentation basket 40 further includes the light module 56. The light module 56 is made-up of two symmetrical parts 56A and 56B. Each symmetrical part 56A and 56B has a connecting element 57 and a flat light emitting element 58. When inserted into the presentation basket 40, the symmetrical parts 56A and 56B of the light module 56 are connected to each other via magnets 57A disposed in the connecting elements 57 in the region of the saddle surface 49 of the bracket base 48B. Each connecting element 57 includes a power button 57B and a battery compartment 57C. Furthermore, a rubber lid 57D is provided at each connecting element 57 which covers a battery capacity indicator 57E and a battery charging port 57F. The rubber lid 57D can be easily removed by the hand in case the batteries must be charged or in case the user wants to check the battery level. Fig. 17 shows the rubber lid 57D when opened.

The light emitting element 58 covers the ground 51 of the presentation basket 40 and illuminates beverages placed into the presentation basket 40 from below. The light emitting element 58 is equipped with a frosted plastic plate 59 made of acrylic glass which allows light to pass through. The frosted plastic plate 59 acts as a diffuser that evenly and diffusely distributes light generated by light emitting diodes located at the edges of the frosted plastic plate 59.

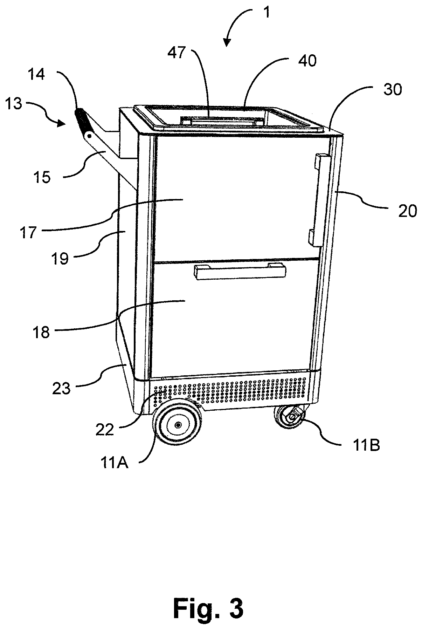

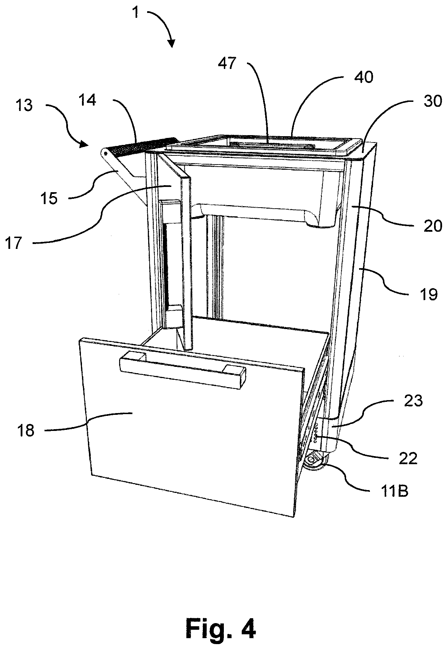

Next, the second embodiment of the beverage serving trolley 1 as shown in Figs. 3 and 4 is described. Compared to the beverage serving trolley 1 according to the first embodiment, the beverage serving trolley 1 according to the second embodiment is laterally enclosed by a housing, a door 17 and a drawer 18. Fig. 4 shows the beverage serving trolley 1 with open door 17 and the drawer 18 pulled out.

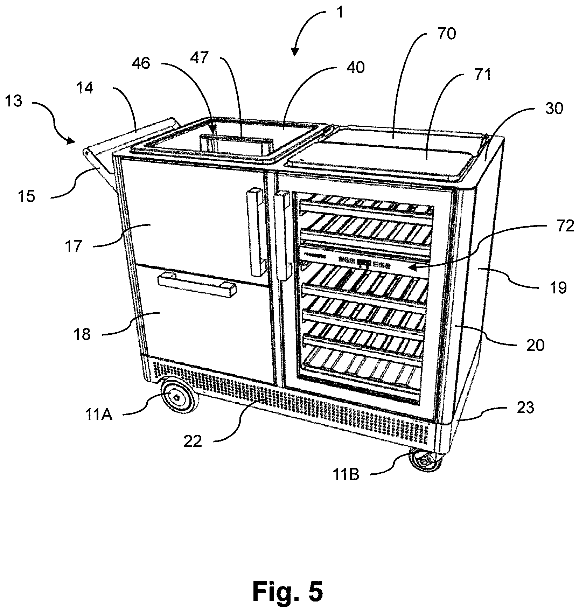

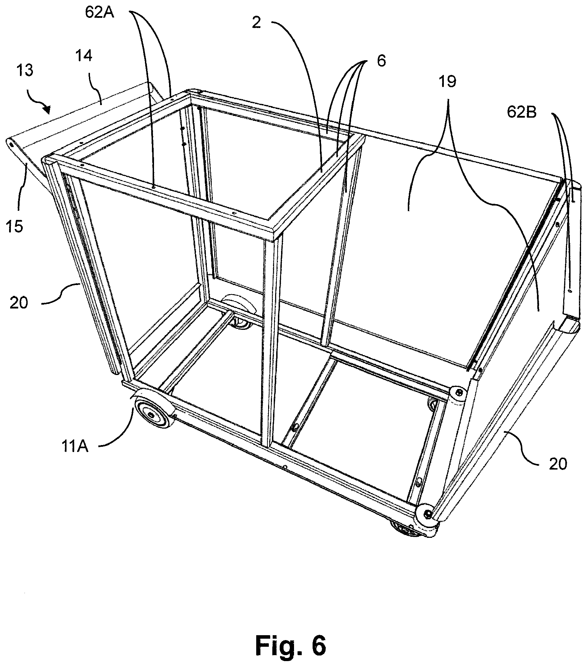

The housing of the beverage serving trolley 1 includes first side panels 19 and edge profiles 20 at an upper part of the beverage serving trolley 1 both vertically extending over the door 17 and the drawer 18, and a second side panel 22 and an encapsulating housing component 23 at a lower part, i.e. under the first side panels 19 and edge profiles 20. These housing components are also present in the beverage serving trolley 1 according to the third embodiment as shown in Fig. 5. In the explanation of the exact construction of the housing components, reference is also made to Figs. 6, 7 and 8.

The edge profiles 20 essentially consist of a folded metal sheet that includes a curved portion 20A that is wrapped around a vertical edge of the beverage serving trolley 1 and is visible from the outside, and two inwardly bent fixing portions 20B. Both the curved portion 20A and the fixing portions 20B vertically extend over the entire edge profile 20. The fixing portions 20B are flat and oriented in a plane perpendicular to the outside surface of the beverage serving trolley 1 at the respective location.

The first side panels 19 also essentially consist of a folded metal sheet. The side panels 19 predominantly have a flat portion 19A and four inwardly bent fixing portions 19B analogue to those of the edge profiles 20. Two of the fixing portions 19B are vertically arranged and are located respectively at the two sides of the flat portion 19A, while the other two fixing portions 19B are horizontally arranged and are located respectively at the upper and lower edges of the flat portion 19A.

Each of the first side panels 19 is connected via its vertically arranged fixing portions 19B to an edge profile 20. The fixing portions 19B and 20B of one first side panel 19 and one edge profile 20, respectively, are thereby oriented coplanar to each other and screwed together by threaded bolts 60 and nuts 61. Further, a spacer 64 is provided between the interconnected fixing portions 19B and 20B and around the used threaded bolts 60 in order to provide and ensure a predetermined vertical gap 21 between the fixing portions 19B and 20B. The vertical gaps 21 are present between each first side panel 19 and edge profile 20 that are connected to each other. In the vertical gaps 21, accessories can be engaged, like the storage box 73 described in connection with the first embodiment. For this purpose, holes like the mounting bore 62B are provided at frequent distances at the fixing portions 19B and 20B of each first side panel 19 and edge profile 20, respectively.

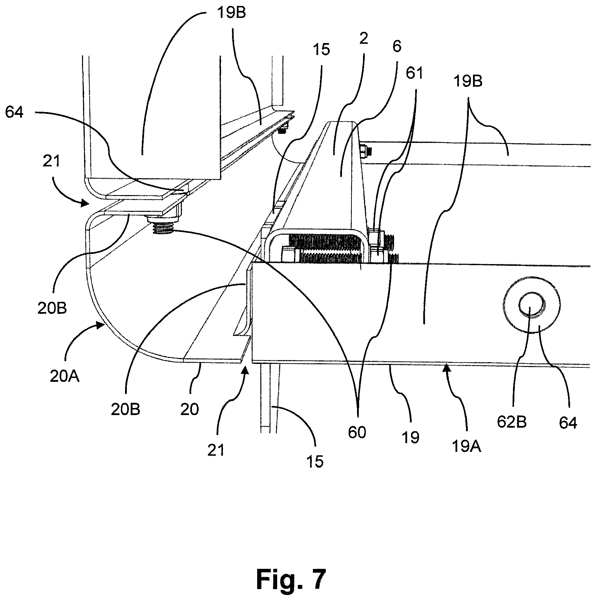

As illustrated in Fig. 6 and shown in Fig. 7 in more detail, the housing components 19 and 20 are additionally fixed to the supporting structure 2 which, in the embodiments shown in Figs. 3 and 5 is constructed by a plurality of metal square tubes 6. As can be seen, one of the fixing portions 20B of the edge profile 20, one of the fixing portions 19B of the first side panel 19 and one square tube 6 are fixed together with a threaded bolt 61 that reaches through the entire square tube 6 and with nuts 61. At the same location, in addition, the handle bracket 15 is mounted between the fixing portions 19B and 20B of the first side panel 19 and the edge profile 20, respectively. The handle bracket 15 is rigidly mounted and is not intended to be removable like, for example, the above-mentioned accessories that can optionally be installed to the vertical gap 21. Here, the handle bracket 15 also replaces the spacer 64 which would normally be present, as described above.

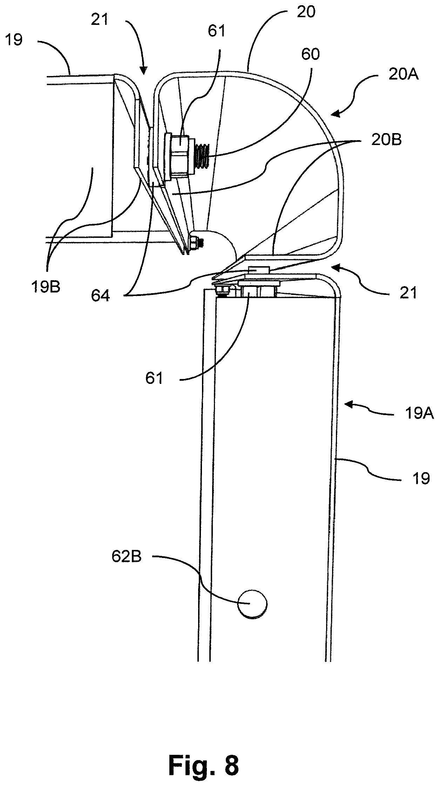

As shown in Figs. 6 and 8, a square tube 6, i.e. the supporting structure 2 is not necessarily present at each vertical edge of the beverage serving trolley 1. This is, for example, the case with the beverage serving trolley 1 according to the third embodiment as shown in Fig. 5. Here, the interconnected housing components provide for enough stability, since the wine cooling cabinet 72 installed in the front part of the beverage serving trolley 1 contributes to the stability due to its dimensions. Therefore, the square tubes 6 at the respective vertical edges of the beverage serving trolley 1 can be omitted.

As mentioned above, the housing of the beverage serving trolley 1 according to the second embodiment (Fig. 3) and the third embodiment (Fig. 5) has a second side panel 22 and an encapsulating housing component 23 at a lower part, i.e. below the above described first side panels 19 and edge profiles 20. These housing components are flush with the first side panels 19 and the edge profiles 20 and do also have a constant height all around the beverage serving trolley 1. The encapsulating housing component 23 is made-up of one piece and extends over all the four corners while leaving one side free for the second side panel 22, which is the side where the door 17 and drawer 18 are present. The second side panel 22 is perforated in order to allow circulation of air.

As a further difference from the first embodiment, the beverage serving trolley 1 according to the second and the third embodiment as shown in Figs. 3 and 5 has four wheels 11A and 11B. While the rear wheels 11A are rigid as those of the beverage serving trolley 1 according to the first embodiment, the front wheels 11B are castor wheels that can swivel about a vertical axis for a more convenient maneuvering.

The rear wheels 11A with their outer surface are flush with the housing and, therefore, the second side panel 22 and the encapsulating housing component 23 have respective cutouts for the rear wheels 11A. The distance between the front wheels 11B to one another is shorter than that of the rear wheels 11A, so that the front wheels 11B are offset inwards compared with the rear wheels 11A.

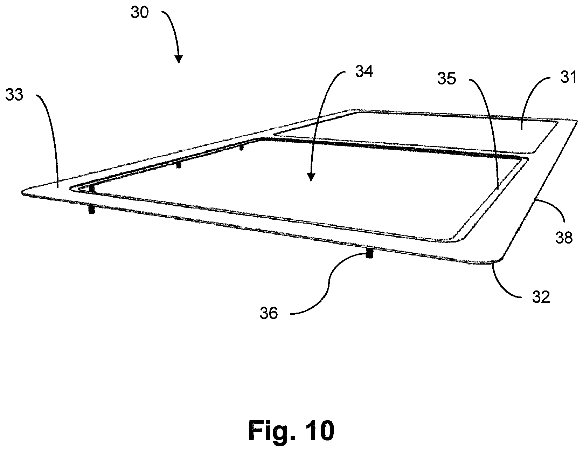

The beverage serving trolley 1 according to the second embodiment (Fig. 3) and the third embodiment (Fig. 5) further has a top plate 30. With reference to Fig. 10 which shows an extended embodiment of the top plate 30 that is used with the third embodiment of Fig. 5, the top plate 30 generally has a flat surface 33, is rectangular and has a rim 38 with rounded corners 32 having a curvature that corresponds to that of the curved portion 20A of the edge profiles 20. At all sides of the beverage serving trolley 1 including the front side and the rear side, the rim 38 of the top plate 30 is flush in a vertical direction with the flat portions 19A of the first side panels 19, with the curved portions 20A of the edge profiles 20 and with doors 17 and drawers 18, where present.

The top plate 30 further has a cutout 34 into which the presentation basket 40 is inserted. At the cutout edge 35, the top plate 30 is sunken in order to provide for a smooth fit of the presentation basket 40, which in turn rests on the sunken cutout edge 35 with its supporting surface 41A at the underside of the upper outer rim 41.

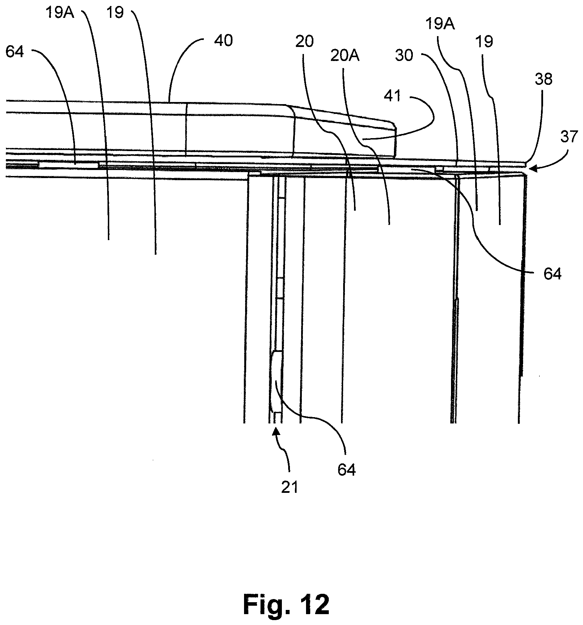

Referring to Fig. 12, the top plate 30 is connected to the horizontally arranged fixing portions 19B at the upper edge of the flat portion 19A of the side panel 19. The spacer 64 is provided inbetween the top plate 30 and the horizontally arranged fixing portions 19B in order to provide for and ensure a predetermined horizontal gap 37 between the top plate 30 on the one hand and the first side panels 19 and the edge profiles 20 on the other hand. The horizontal gap 37 corresponds in its width with the vertical gap 21.

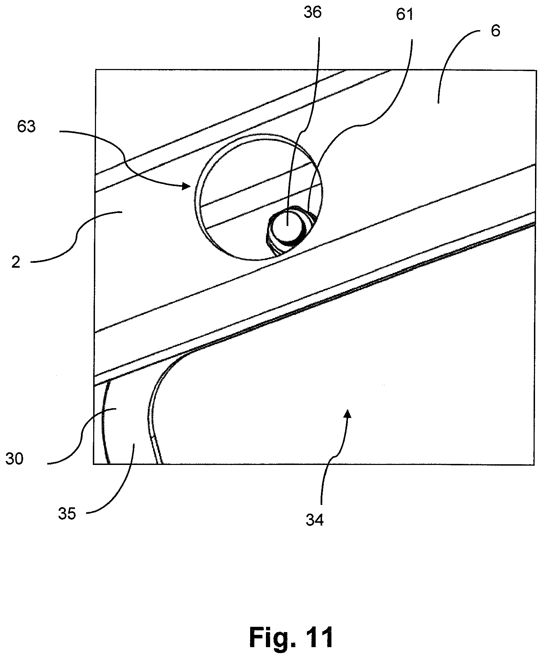

For the mounting of the top plate 30, the top plate 30 includes bolts 36 protruding down from the underside of the top plate 30. Each bolt 36 is fastened either only to the respective fixing portion 19B of the first side panel 19, only to a square tube 6 of the supporting structure 2 or to a square tube 6 of the supporting structure 2 with the fixing portion 19B of the first side panel 19 clamped inbetween. Fig. 11 shows the mounting details when the bolt 36 is fastened to the square tube 6 of the supporting structure 2 in the case where no fixing portion 19B of the first side panel 19 is present. This is, for example, the case at the region of a door 17. As can be seen in Fig. 11, the bolt 36 reaches through the mounting bore 62 A (refer to Fig. 6) in the square tube 6. In order to provide access to the bolt 36 and to being able to fastening it with the nut 61, an opening 63 is provided at the square tube 6 which allows access with an appropriate tool (not shown) for fastening the nut 61.

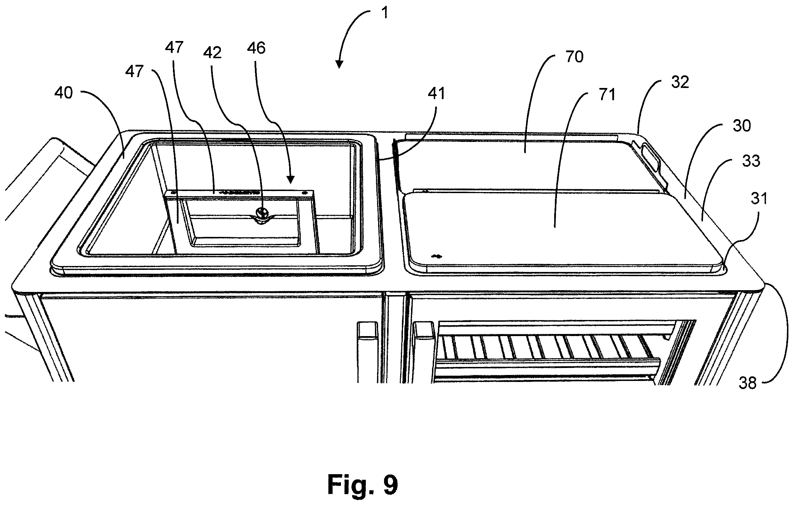

While the top plate 30 of the second embodiment shown in Fig. 3 is square, the top plate 30 of the beverage serving trolley 1 according to the third embodiment shown in Fig. 5 is broader and further includes an area besides the presentation basket 40 on which a serving tray 70 and a chopping board 71 are placed. Fig. 9 shows the upper part of the beverage serving trolley 1 as an enlarged section with more details of the top plate 30 and Fig. 10 shows the isolated top plate 30. In area next to the presentation basket 40, the top plate 30 has a recessed portion 31 in order to hold the serving tray 70 and the chopping board 71 in place when moving the beverage serving trolley 1. The recessed portion 31 is not subdivided and is one single square shaped recessed portion 31. The serving tray 70 and the chopping board 71 are oblong and fit next to each other in the recessed portion 31 either lengthwise or crosswise to the moving direction of the beverage serving trolley 1.

The third embodiment of the beverage serving trolley 1 as shown in Fig. 5 is larger or, more particular, longer than the second embodiment of the beverage serving trolley 1 as shown in Fig. 3. The beverage serving trolley 1 of Fig. 5 further includes the wine cooling cabinet 72 which is located below the serving tray 70 and the chopping board 71, and next to the door 17 and the drawer 18. The wine cooling cabinet 72 works electrically and the respective power cable (not shown) can be stowed during non-use below the wine cooling cabinet 72 and out of sight. Furthermore, the beverage serving trolley 1 includes a battery (not shown) for the wine cooling cabinet 72 which is either integrated into the wine cooling cabinet 72 itself or provided separately below the wine cooling cabinet 72.

### REFERENCE NUMERALS

- 1: Beverage serving trolley
- 2: supporting structure
- 3A: rear U-shaped steel plate
- 3B: front U-shaped steel plate
- 4: vertical part of U-shaped steel plate
- 5: horizontal part of U-shaped steel plate
- 6: square tube
- 11A: rear wheel
- 11B: front wheel
- 13: handle
- 14: handlebar
- 15: handle bracket
- 16: shelf
- 17: door
- 18: drawer
- 19: first side panel
- 19A: flat portion
- 19B: fixing portion of first side panel
- 20: edge profile
- 20A: curved portion
- 20B: fixing portion of edge profile
- 21: vertical gap
- 22: second side panel
- 23: encapsulating housing component
- 24: presentation basket supporting frame
- 25: upper edge of supporting frame
- 30: top plate
- 31: recessed portion
- 32: rounded corner
- 33: flat surface of top plate
- 34: cutout
- 35: cutout edge
- 36: bolt
- 37: horizontal gap
- 38: rim of top plate
- 40: presentation basket
- 41: upper outer rim of presentation basket
- 41A: supporting surface
- 42: outlet
- 43: inner side wall
- 44: upper inner rim
- 45: cover accommodating area
- 46: basket handle
- 47: basket handlebar
- 48: basket handle bracket
- 48A: bracket column
- 48B: bracket base
- 49: saddle surface
- 50: footstand
- 51: ground inside the presentation basket
- 52: ice pack
- 53: sheet metal tray
- 53A: side wall of sheet metal tray
- 53B: ground of sheet metal tray
- 53C: upper edge of sheet metal tray
- 53D: cutout of sheet metal tray
- 56: light module
- 56A, B: symmetrical part of light module
- 57: connecting element
- 57A: magnet
- 57B: power button
- 57C: battery compartment
- 57D: rubber lid
- 57E: battery capacity indicator
- 57F: battery charging port
- 58: light emitting element
- 59: frosted plastic plate
- 60: threaded bolt
- 61: nut
- 62A: mounting bore at square tube
- 62B: mounting bore at fixing portion of side panel
- 63: opening
- 64: spacer
- 70: serving tray
- 71: chopping board
- 72: wine cooling cabinet
- 73: storage box
- 74: board

## Claims

1. Beverage serving trolley (1) comprising a supporting structure (2), at least one wheel (11A, 11B), a presentation basket (40) being configured to receive beverage bottles and ice cubes, and a horizontally arranged top plate (30) including a flat surface (33) and a rim (38) and being of a rectangular shape,
the top plate (30) comprises a cutout (34) that is configured to accommodate the presentation basket (40), wherein the top plate (30) and the presentation basket (40) are configured such that the presentation basket (40) can be inserted into the cutout (34) from the above and is removable from the cutout (34) by lifting the presentation basket (40) in an upward direction, wherein in the inserted state of the presentation basket (40), the presentation basket (40) rests on a cutout edge (35) that is sunken with respect to the flat surface (33) of the top plate (30),
**characterized in that**
at the underside of the top plate (30), the top plate (30) comprises a plurality of bolts (36) along the rim (38) protruding downwards and the top plate (30) is fixed to the beverage serving trolley (1) by the bolts (36), and
wherein the top plate (30) including the bolts (38) are of metal and the bolts (38) are welded to the underside of the top plate (30),
wherein the top plate (30) further includes at least one recessed portion (31) that is configured to accommodate a serving tray (70) and/or a chopping board (71) in order to hold the serving tray (70) and/or the chopping board (71) in place when moving the beverage serving trolley (1).

2. Beverage serving trolley (1) according to claim 1,
**characterized in that**
the top plate (30) has only one recessed portion (31) that has a rectangular area.

3. Beverage serving trolley (1) according to claim 2,
**characterized in that**
the flat surface (33) surrounds the sunken cutout edge (35) and the recessed portion (31) and extends to the rim (38).

4. Beverage serving trolley (1) according to claim 3,
**characterized in that**
the top plate has a vertically cut edge at the rim (38).

5. Beverage serving trolley (1) according to claim 4,
**characterized in that**
the rectangular shape of the top plate (30) has rounded corners (32).

6. Beverage serving trolley (1) according to claim 5,
**characterized in that**
the material thickness of the top plate (30) at least at the rim (38) is within the range of 1 mm and 5 mm.

7. Beverage serving trolley (1) according to claim 6,
**characterized in that**
the beverage serving trolley (1) has a horizontal gap (37) all around the beverage serving trolley (1) below the rim (38) of the top plate (30).

8. Beverage serving trolley (1) according to any one of the preceding claims,
**characterized in that**
the beverage serving trolley (1) further comprises a handle (13) for moving the beverage serving trolley (1).

## Patentansprüche

1. Getränkeservierwagen (1) mit einer Tragkonstruktion (2), mindestens einem Rad (11A, 11B), einem Präsentationskorb (40), der so gestaltet ist, dass er Getränkeflaschen und Eiswürfel aufnehmen kann, und einer horizontal angeordneten Deckplatte (30), die eine flache Oberfläche (33) und einen Rand (38) aufweist und eine rechteckige Form hat, wobei
die Deckplatte (30) einen Ausschnitt (34) aufweist, der so konfiguriert ist, dass er den Präsentationskorb (40) aufnehmen kann, wobei die Deckplatte (30) und der Präsentationskorb (40) so konfiguriert sind, dass der Präsentationskorb (40) von oben in den Ausschnitt (34) eingesetzt werden kann und aus dem Ausschnitt (34) durch Anheben des Präsentationskorbs (40) nach oben herausgenommen werden kann;
der Präsentationskorb (40) im eingesetzten Zustand des Präsentationskorbes (40) auf einer gegenüber der flachen Oberfläche (33) der Deckplatte (30) vertieften Ausschnittkante (35) aufliegt;
**dadurch gekennzeichnet, dass**
an der Unterseite der Deckplatte (30) die Deckplatte (30) entlang des Randes (38) eine Vielzahl von nach unten abstehenden Bolzen (36) aufweist und die Deckplatte (30) mit den Bolzen (36) am Getränkeservierwagen (1) befestigt ist; und
die Deckplatte (30) einschließlich der Bolzen (38) aus Metall besteht und die Bolzen (38) an der Unterseite der Deckplatte (30) angeschweißt sind,
wobei die Deckplatte (30) ferner mindestens einen vertieften Abschnitt (31) aufweist, der so konfiguriert ist, dass er ein Serviertablett (70) und/oder ein Schneidebrett (71) aufnehmen kann, um das Serviertablett (70) und/oder das Schneidebrett (71) beim Bewegen des Getränkeservierwagens an Ort und Stelle zu halten.

2. Getränkeservierwagen (1) nach Anspruch 1, **dadurch gekennzeichnet, dass** die Deckplatte (30) nur einen vertieften Abschnitt (31) mit einer rechteckigen Fläche aufweist.

3. Getränkeservierwagen (1) nach Anspruch 2, **dadurch gekennzeichnet, dass** die flache Oberfläche (33) die vertiefte Ausschnittkante (35) und den vertieften Abschnitt (31) umgibt und sich bis zum Rand (38) hin erstreckt.

4. Getränkeservierwagen (1) für Getränke nach Anspruch 3, **dadurch gekennzeichnet, dass** die Deckplatte am Rand (38) eine vertikal geschnittene Kante aufweist.

5. Getränkeservierwagen (1) für Getränke nach Anspruch 4, **dadurch gekennzeichnet, dass** die rechteckige Form der Deckplatte (30) abgerundete Ecken (32) aufweist.

6. Getränkeservierwagen (1) für Getränke nach Anspruch 5, **dadurch gekennzeichnet, dass** die Materialstärke der Deckplatte (30) zumindest am Rand (38) im Bereich von 1 mm bis 5 mm liegt.

7. Getränkeservierwagen (1) nach Anspruch 6, **dadurch gekennzeichnet, dass** der Getränkeservierwagen (1) einen horizontalen Spalt (37) um den gesamten Getränkeservierwagen (1) herum unterhalb des Randes (38) der Deckplatte (30) aufweist.

8. Getränkeservierwagen (1) nach einem der vorstehenden Ansprüche, **dadurch gekennzeichnet, dass** der Getränkeservierwagen (1) ferner einen Griff (13) zum Bewegen des Getränkeservierwagens (1) aufweist.

## Revendications

1. Chariot de service à boissons (1) comprenant une structure de support (2), au moins une roue (11A, 11B), un panier de présentation (40) qui est configuré pour recevoir des bouteilles de boisson et des glaçons, et une plaque supérieure horizontale (30) présentant une surface plate (33) et un bord (38) et étant de forme rectangulaire,
la plaque supérieure (30) présentant une découpe (34) qui est configurée pour recevoir le panier de présentation (40), ladite plaque supérieure (30) et le panier de présentation (40) étant configuré de façon que le panier de présentation (40) peut être inséré dans la découpe (34) par le haut et peut être enlevé de la découpe (34) en levant le panier de présentation (40) dans une direction vers le haut,
en état inséré dudit panier de présentation (40), le panier de présentation (40) étant en appui sur un bord de découpe (35) qui est enfoncé par rapport à la surface plate (33) de la plaque supérieure (30),
**caractérisé en ce que**
sur la face inférieure de la plaque supérieure (30), la plaque supérieure (30) comprend une pluralité de boulons (36) le long du bord (38) qui sont en saillie vers le bas et la plaque supérieure (30) est attachée au chariot de service à boissons (1) par lesdits boulons (36), et la plaque supérieure (30) et y compris les boulons (36) étant en métal et les boulons (36) sont soudés à la face inférieure de la plaque supérieure (30),
la plaque supérieure (30) comprenant en outre au moins une partie enfoncée (31) qui est configurée pour recevoir un plateau de service (70) et/ou une planche à découper (71) pour maintenir le plateau de service (70) et/ou la planche à découper (71) en place lors d'un déplacement du chariot de service à boissons (1).

2. Chariot de service à boissons (1) selon la revendication 1,
**caractérisé en ce que**
la plaque supérieure (30) comprend seulement une partie enfoncée (31) qui présente une zone rectangulaire.

3. Chariot de service à boissons (1) selon la revendication 2,
**caractérisé en ce que**
la surface plate (33) entoure le bord de découpe enfoncé (35) et la partie enfoncée (31) et s'étend jusqu'au bord (38).

4. Chariot de service à boissons (1) selon la revendication 3,
**caractérisé en ce que**
la plaque supérieure présente un bord verticalement découpé auprès du bord (38).

5. Chariot de service à boissons (1) selon la revendication 4,
**caractérisé en ce que**
la forme rectangulaire de la plaque supérieure (30) a des coins arrondis (32).

6. Chariot de service à boissons (1) selon la revendication 5,
**caractérisé en ce que**
l'épaisseur du matériau de la plaque supérieure (30) au moins auprès du bord (38) est comprise dans la plage de 1 mm à 5 mm.

7. Chariot de service à boissons (1) selon la revendication 6,
**caractérisé en ce que**
le chariot de service à boissons (1) présente un écart horizontal (37) tout autour du chariot de service à boissons (1) au-dessous du bord (38) de la plaque supérieure (30).

8. Chariot de service à boissons (1) selon l'une quelconque des revendications précédentes,
**caractérisé en ce que**
le chariot de service à boissons (1) comprend en outre une poignée (13) pour déplacer le chariot de service à boissons (1).
